# FASCICULE DE BREVET EUROPEEN

(11) **EP 2 590 793 B1**
(45) Date de publication et mention de la délivrance du brevet: **14.09.2016**
(21) Numéro de dépôt: 11743299.7
(22) Date de dépôt: 05.07.2011
(51) Int. Cl.: B29C 45/14, B29C 45/16, A47B 77/06, A47B 96/18, E03C 1/18, E03C 1/33

(54) **PROCEDE DE REALISATION D'UNE VASQUE INTEGREE A UN PLAN RECEPTEUR ET ENSEMBLE MONOBLOC OBTENU PAR LE PROCEDE**
VERFAHREN ZUR HERSTELLUNG EINER IN EINE AUFNAHMEOBERFLÄCHE EINGEBAUTEN VERTIEFUNG UND IN DIESEM VERFAHREN GEWONNENE INTEGRALEINHEIT
METHOD FOR PRODUCING A BOWL BUILT INTO A RECEIVING SURFACE AND INTEGRAL UNIT OBTAINED BY MEANS OF THE METHOD

(30) Priorité: 06.07.2010 FR 1002838
(43) Date de publication de la demande: 15.05.2013
(73) Titulaire: CHENE VERT, 81000 Albi (FR)
(72) Inventeur: GALINIER, Benoît, F-81000 Albi (FR)
(74) Mandataire: Cabinet BARRE LAFORGUE & associés
(86) Numéro de dépôt international: PCT/FR2011/051597
(87) Numéro de publication internationale: WO 2012/004526

(56) Documents cités:
- WO-A1-03/080949
- WO-A1-2009/004896
- ES-A1- 2 265 214
- FR-A1- 2 778 419
- JP-A- 53 077 760
- JP-A- 58 028 315
- JP-A- 59 196 219
- US-B1- 6 311 345

## Description

L'invention concerne un procédé de réalisation d'un ensemble monobloc comportant une vasque intégrée à un plan récepteur, en particulier un plan sanitaire ou un plan de travail de salle de bain ou de cuisine. Elle s'étend à l'ensemble monobloc ainsi obtenu.

Les meubles de salle de bains ou de cuisine possèdent un panneau supérieur formant un plan sanitaire ou de travail, dans lequel est encastrée une vasque, généralement vasque d'évier ou de lavabo ; ce panneau supérieur peut être habillé d'un revêtement (en particulier en stratifié) et est souvent désigné par "plan récepteur". Deux types de techniques connues permettent d'intégrer la vasque dans le plan récepteur. Après perçage d'une ouverture dans ce dernier, la vasque peut être mise en place dans ladite ouverture soit par le dessous du plan récepteur, soit par-dessus celui-ci.

On connaît, par exemple du brevet EP 1 076 740, une mise en oeuvre de cette seconde technique permettant d'obtenir un ensemble présentant un affleurement de la vasque au niveau de la surface supérieure du plan récepteur. Cette pose avec affleurement de la vasque présente l'avantage d'assurer une continuité de surface entre vasque et plan récepteur, évitant les accumulations de souillures et facilitant le nettoyage.

Cependant, cette technique, si elle donne satisfaction pour la réalisation de pièces unitaires, présente de nombreux inconvénients dès lors qu'une fabrication en série est envisagée. En effet, le montage de la vasque dans l'ouverture pratiquée dans le plan récepteur nécessite de nombreux ajustements, tant verticalement pour obtenir un affleurement du bord de la vasque au niveau du plan récepteur que radialement, où il est nécessaire que le contour de la vasque suive exactement le contour de l'ouverture pratiquée dans le plan récepteur. Ainsi, l'usinage de l'ouverture qui nécessite une grande précision dans les trois dimensions pour se conformer à la forme de la vasque, présente une tolérance assez large, due à l'usure des outils et à la relative friabilité de la matière lorsque le plan est constitué de particules de bois aggloméré. De même, le contour des vasques, même si les procédés d'obtention de celles-ci sont plus précis, doit être prévu au maximum de la tolérance des ouvertures des plans récepteurs et doit donc faire l'objet de ponçages et d'ajustements au cas par cas pour appairer chaque vasque avec chaque plan.

On connaît également du document WO 2009/004896 un procédé d'obtention d'un plan de travail comportant une vasque affleurant la face supérieure du plan récepteur, dans lequel un plan de travail est moulé en résine polymérisable à chaud, une ouverture correspondant à la vasque est découpée dans le plan de travail puis un moule en forme de vasque en deux parties est monté sur le plan de manière à enserrer le pourtour de l'ouverture. Une résine thermodurcissable bi-composante est ensuite coulée dans le moule, puis dégazée et chauffée jusqu'à polymérisation complète de la résine.

Les résines employées dans ce procédé sont des résines coûteuses et présentent des caractéristiques mécaniques de fragilité et de rigidité difficilement compatibles avec l'environnement d'une vasque, ce qui les réserve à un emploi pour des pièces unitaires. De plus la préparation des résines bi-composantes est délicate, en particulier pour le dosage et sensible aux conditions d'environnement.

En outre, la mise en oeuvre des différents collages et remplissages de résine impose des temps d'attente (dégazage, coulage, séchage, polymérisation, etc.) et des manipulations nombreuses (mise sous presse pour le collage, retournement des plans pour coulage du talon de résine, etc.) qui sont préjudiciables à la qualité et à la productivité lors d'une production en série.

On connait encore du document JP 58-028315 un plan de travail dans lequel on moule une pièce intermédiaire destinée à recevoir une vasque.

La présente invention se propose de pallier les inconvénients de la technique antérieure connue évoqués ci-dessus, en permettant d'obtenir un affleurement parfait de la vasque dans le plan récepteur, avec un temps de cycle adapté à la production de série sans sacrifice de l'esthétique recherchée pour ce type de produit.

L'invention a en outre pour objectif de permettre la réalisation d'un ensemble dans lequel la fixation de la vasque présente simultanément les avantages d'une vasque insérée par le dessus et par le dessous, c'est-à-dire un verrouillage positif, dans la direction normale au plan récepteur, dans un sens comme dans l'autre.

L'invention vise encore à permettre la réalisation d'un ensemble monobloc vasque / plan récepteur dans lequel la fiabilité et la tenue dans le temps ainsi qu'aux sollicitations externes sont améliorées sans sacrifice de l'aspect du produit.

L'invention vise également à permettre l'obtention d'un aspect fini de qualité remarquable, avec en particulier une continuité parfaite entre la vasque et le plan récepteur au niveau de la face supérieure de ce dernier.

L'invention vise aussi à proposer un procédé de réalisation d'un ensemble plan récepteur / vasque qui soit apte à utiliser des géométries variées et de nombreuses matières pour le plan récepteur, sans nécessiter de profondes modifications.

En vue de rendre la description plus claire, on supposera dans toute la suite le plan récepteur et la vasque dans leur position normale de service, les termes « haut », « bas », « supérieur », « inférieur » se référant à cette position.

Pour atteindre ces buts, l'invention concerne un procédé de réalisation d'une vasque intégrée à un plan de travail, dit plan récepteur, comportant une face supérieure et une face inférieure, procédé selon lequel
- on perce de part en part le plan récepteur et on forme une ouverture adaptée pour recevoir la vasque,
- on utilise un moule comprenant :
   - une première coquille de forme générale concave, dite coquille inférieure, adaptée pour venir en appui sur la face inférieure du plan récepteur et
   - au moins une coquille de forme générale convexe, dite coquille(s) supérieure(s), adaptée(s) pour venir en appui sur la face supérieure du plan récepteur et former avec la coquille inférieure une cavité de moulage, dite empreinte, de la forme de la vasque à obtenir,
- on installe le plan récepteur dans le moule de manière à pincer la périphérie de l'ouverture du plan récepteur entre la coquille inférieure et une coquille supérieure de telle sorte qu'au moins une partie du chant de l'ouverture constitue une paroi périphérique continue du moule reliant la coquille inférieure à la coquille supérieure,
caractérisé en ce que
- le moule est adapté pour permettre l'injection de matière synthétique thermoplastique,
- la coquille inférieure comporte une zone concave entourée d'un rebord convexe s'étendant le long du chant de l'ouverture, à l'intérieur et à distance de celui-ci, en saillie par rapport au niveau de la face inférieure du plan récepteur en direction de sa face supérieure, ledit rebord étant adapté pour permettre la formation d'une jupe périphérique de la vasque entre le chant de l'ouverture et ledit rebord lors du surmoulage de la vasque
- et en ce qu'on injecte une matière synthétique thermoplastique dans l'empreinte de manière à former une vasque surmoulée sur le plan récepteur.

Ainsi, la vasque est formée à même le plan récepteur, la matière synthétique constituant la vasque fluant, à l'état liquide ou visqueux, pour remplir l'empreinte du moule et rejoindre les bords de l'ouverture. Des anomalies dans la réalisation du chant de l'ouverture, telles que des irrégularités du bord qui auraient été visibles dans les réalisations de la technique antérieure sont masquées par la matière synthétique de la vasque qui les comble. Aucun ajustement du contour de la vasque n'est nécessaire pour s'adapter parfaitement au contour de l'ouverture du plan récepteur. La partie visible de la vasque présente un aspect lisse et brillant en fonction de la matière employée et de l'état de surface de la coquille supérieure du moule. En outre, la vasque est « suspendue » au chant de l'ouverture par sa jupe périphérique ce qui permet une relative souplesse du maintien de la vasque dans le plan récepteur et améliore la tenue de l'ensemble aux sollicitations externes (cycles climatiques, chocs, etc.)

Avantageusement et selon l'invention, chaque coquille supérieure du moule est adaptée pour venir en appui plan sur le plan récepteur et former une paroi supérieure de l'empreinte s'étendant exclusivement au niveau et sous le niveau de la face supérieure du plan récepteur afin d'obtenir une vasque surmoulée affleurant à la face supérieure du plan récepteur. L'encastrement de la vasque ainsi réalisé ne nécessite aucun ajustement en hauteur pour obtenir un affleurement parfait, celui-ci étant réalisé par construction.

Avantageusement et selon l'invention, la coquille inférieure comporte un épaulement à la base du rebord, en regard du chant de l'ouverture, adapté pour permettre le centrage de l'ouverture du plan récepteur par rapport au moule d'injection. Cet épaulement permet de réduire la hauteur de la jupe de la vasque et de limiter le volume de matière mis en jeu dans celle-ci tout en améliorant et facilitant le positionnement du plan récepteur sur le moule.

Avantageusement et selon l'invention, l'épaulement présente à intervalles réguliers une hauteur accrue en direction de la face supérieure du plan récepteur afin de diviser la jupe de la vasque en secteurs indépendants. Concomitamment avec la réduction de la hauteur de la jupe, la division de celle-ci en secteurs indépendants permet d'absorber les éventuelles dilatations de la matière, particulièrement selon le périmètre de la vasque.

Avantageusement et dans une première variante du procédé selon l'invention, lors de l'étape d'injection, on utilise une matière synthétique thermoplastique unique pour former la vasque. Le procédé de réalisation selon l'invention ne nécessite ainsi qu'une seule passe d'injection ce qui simplifie le processus et réduit le nombre d'opérations.

Avantageusement et selon l'invention, on utilise une matière synthétique thermoplastique choisie parmi le polyméthacrylate de méthyle ou les polycarbonates. Ces matières permettent d'obtenir un état de surface et une qualité d'aspect comparable avec les différents types de vasques du commerce, qu'elles soient en matière synthétique, en émail ou en porcelaine. Ces matières permettent également l'incorporation de colorants permettant d'assortir la couleur de la vasque à celle du plan récepteur.

Avantageusement et selon l'invention, lors de l'installation du plan récepteur dans le moule, on fixe au plan récepteur et/ou à la coquille inférieure un insert de renfort adapté pour être noyé dans la matière synthétique injectée à l'étape d'injection. Un tel insert, se présentant sous la forme d'une calotte ajourée par exemple, peut être ainsi inclus dans la matière synthétique thermoplastique sans nuire à l'esthétique de la vasque et lui apporter certaines qualités mécaniques (résistance au choc, etc.) que ne permet pas d'atteindre la matière utilisée seule.

Avantageusement et dans une deuxième variante du procédé selon l'invention, l'étape d'injection est décomposée en deux passes, une première passe utilisant une première coquille supérieure définissant une première empreinte en retrait par rapport à la face supérieure du plan récepteur et une première matière synthétique choisie pour conférer une résistance mécanique recherchée à la vasque et une deuxième passe utilisant une deuxième coquille supérieure définissant une empreinte complémentaire au dessus de la première empreinte et une deuxième matière synthétique choisie pour apporter un état de surface recherché à la vasque. Dans cette variante, et selon l'invention, on utilise une première matière synthétique choisie parmi l'ABS, les polycarbonates et les polyamides et une deuxième matière synthétique choisie parmi le polyméthacrylate de méthyle ou les polycarbonates.

Avantageusement et selon l'invention, lors de la formation de l'ouverture dans le plan récepteur, on réalise sur et/ou au voisinage du chant de ladite ouverture des moyens d'ancrage adaptés pour permettre l'ancrage de la vasque surmoulée au plan récepteur. En fonction de la matière du plan récepteur, particulièrement si cette matière est lisse et sans anfractuosités, il peut être utile d'améliorer la tenue de la vasque sur le plan récepteur en ménageant des moyens d'ancrage sur ce dernier.

Avantageusement et selon l'invention, lesdits moyens d'ancrage comportent au moins une saignée radiale formée dans le chant de l'ouverture, parallèlement aux faces du plan récepteur. Une telle saignée radiale réalise ainsi un blocage positif de la vasque dans le plan récepteur, selon une direction orthogonale au plan et dans les deux sens, rendant la vasque parfaitement solidaire du plan récepteur, quels que soient les efforts appliqués, soit sous la charge de service (poids de l'eau par exemple) soit sous des charges plus exceptionnelles telles que résultant d'un empilage des ensembles monoblocs lors du transport.

Avantageusement et selon l'invention, on utilise un plan récepteur comprenant un panneau support recouvert par une plaque de décor sur la face supérieure du plan récepteur, et au moins une saignée radiale est formée dans le panneau support, sa largeur étant limitée en direction de la face supérieure du plan récepteur par la plaque de décor. En réalisant ainsi la saignée juste sous la plaque de décor, on obtient un collage de la matière synthétique thermoplastique sur la plaque de décor, elle-même le plus souvent en matériau synthétique, et l'étanchéité périphérique de la vasque est grandement améliorée.

Avantageusement et selon l'invention, lesdits moyens d'ancrage comportent en outre une rainure orthogonale formée dans la face inférieure du plan récepteur, sensiblement parallèle au contour de l'ouverture, et reliée à celle-ci par un évidement radial de ladite face inférieure. Les moyens d'ancrage ainsi réalisés forment un profilé périphérique présentant une section en crochet assurant une tenue radiale de la vasque et un talon d'arrêt de celle-ci coopérant avec la forme générale du rebord de la vasque pour prendre le plan récepteur en feuillure.

Avantageusement et selon l'invention, on perce dans la face inférieure du plan récepteur une série de trous orthogonaux à cette face, régulièrement espacés sur le contour de l'ouverture, à distance du chant de celle-ci, traversant la (les) saignée(s) radiale(s) sans déboucher sur la face supérieure du plan récepteur, adaptés pour former un ancrage radial de la vasque ainsi qu'un volume de compensation pour la matière synthétique injectée. Cette disposition permet d'améliorer la fixation radiale de la vasque dans le plan récepteur, d'éviter les retassures et de parfaire la finition du bord de la vasque en permettant un écoulement de la matière au-delà de ce bord.

Avantageusement et selon l'invention, lors de la formation de l'ouverture dans le plan récepteur, on réalise dans la face inférieure du plan récepteur des logements d'indexation adaptés pour coopérer avec des saillies ménagées sur la coquille inférieure afin de positionner et maintenir le plan récepteur dans le moule d'injection. Ces saillies, disposées circonférentiellement autour de l'ouverture du plan récepteur permettent également d'absorber les efforts radiaux développés par l'injection de la matière synthétique et d'éviter un éventuel éclatement du plan récepteur sous la pression d'injection.

Avantageusement et selon l'invention, la coquille inférieure comporte des moyens d'immobilisation du plan récepteur adaptés pour résister à une pression radiale d'injection s'exerçant sur le chant de l'ouverture. Compte tenu des pressions d'injection nécessaires pour assurer un bon remplissage du moule, le chant de l'ouverture du plan récepteur est soumis à une forte pression radiale qui peut avoir pour effet de faire éclater le plan récepteur. Outre les saillies et les logements d'indexation qui peuvent remplir une fonction secondaire de maintien du plan récepteur, on prévoit sur la coquille inférieure des moyens d'immobilisation du plan, sous la forme de reliefs s'ancrant dans la face inférieure de celui-ci ou encore de butées mobiles venant s'appuyer sur les bords externes du plan récepteur, aux endroits les plus fragiles.

Avantageusement et selon l'invention, au moins une des coquilles du moule présente des bossages interrompant la continuité de l'empreinte et adaptés pour former des orifices dans la vasque lors du surmoulage. Grâce à ces bossages qui opèrent comme des noyaux de moulage, le cas échéant escamotables (tiroirs), des orifices tels que trop-plein ou trou de bonde de la vasque sont réalisés simultanément lors de l'injection, avec une précision et un état de surface supérieurs à ce qui pourrait être obtenu par usinage, sans recourir à des opérations supplémentaires de reprise.

Il est décrit un plan récepteur, adapté pour la mise en oeuvre du procédé évoqué ci-dessus, comportant une ouverture de contour fermé traversant ledit plan de sa face supérieure à sa face inférieure et présentant un chant caractérisé en ce que ledit chant comporte au moins une saignée radiale s'étendant au moins partiellement le long dudit contour dans un plan parallèle aux faces du plan récepteur.

Avantageusement ledit plan récepteur comprend un panneau support recouvert par une plaque de décor sur sa face supérieure, la saignée radiale étant contiguë à la plaque de décor qui forme un surplomb au dessus de la saignée.

L'invention s'étend également à un ensemble monobloc comprenant un plan récepteur et au moins une vasque, solidaires l'un de l'autre, caractérisé en ce que chaque vasque est surmoulée sur le chant d'une ouverture formée dans le plan récepteur.

D'autres buts, caractéristiques et avantages de l'invention apparaîtront au vu de la description qui va suivre et des dessins annexés dans lesquels :
- la figure 1 représente une vue schématique d'une presse de moulage mettant en oeuvre le procédé selon l'invention,
- la figure 2 représente une coupe radiale partielle d'un plan récepteur et d'une vasque surmoulée encore dans le moule selon un premier mode de réalisation de l'ensemble monobloc plan / vasque.
- les figures 3A et 3B illustrent une deuxième variante,
- les figures 4A et 4B représentent différents modes de réalisation des moyens d'ancrage de la vasque sur le plan récepteur, et
- la figure 5 représente une perspective en coupe partielle d'un ensemble monobloc plan / vasque obtenu par le procédé selon l'invention.

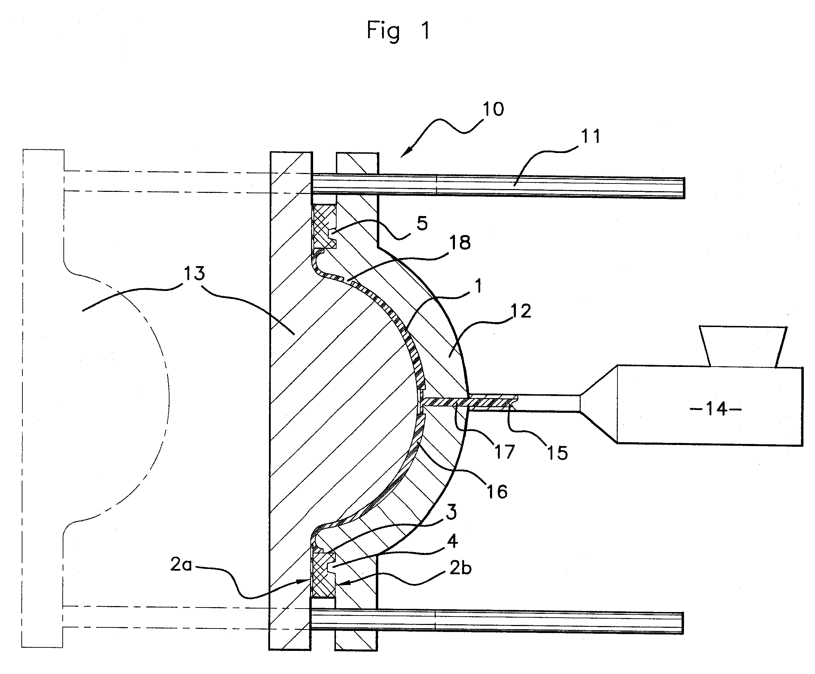

Le procédé de réalisation d'une vasque 1 intégrée à un plan de travail ou plan récepteur 2 est illustré à la figure 1. Selon ce procédé, on découpe une ouverture 3 dans le plan récepteur 2, de forme adaptée au contour recherché pour la vasque. La découpe de l'ouverture 3 dans le plan récepteur 2 s'effectue de manière classique, par exemple par défonçage avec une fraise de forme. Cependant, dans le cadre de l'invention, certaines modifications qui seront détaillées plus loin, ont été apportées à cette opération.

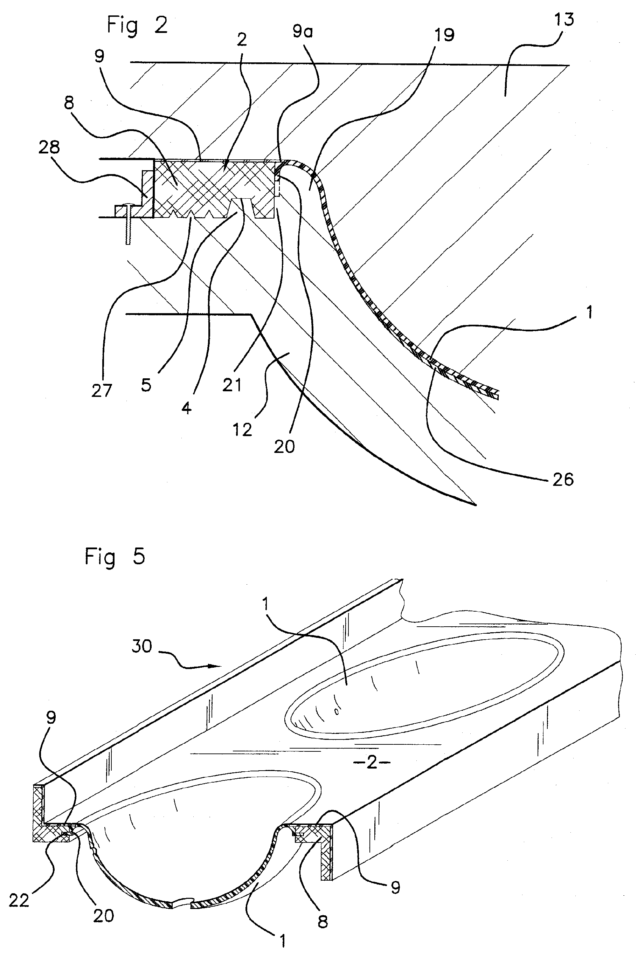

Un type de plan récepteur 2 couramment employé pour la réalisation de plans de travail de cuisine ou de salle de bain comportant un évier ou une vasque (on utilisera ce dernier terme dans tout le texte avec la signification générale de « bassin » désignant tout type d'évier, lavabo, bac, vasque, etc.) est constitué d'un panneau support 8 (figure 2), généralement en bois ou en particules de bois agglomérées par de la résine synthétique. Le panneau support 8 peut être recouvert sur une face (utilisée en général comme face supérieure) par une plaque de décor 9, de faible épaisseur, en général en matière synthétique, par exemple une plaque de stratifié imitant le bois ou le marbre ou toute matière décorative, ou du papier imprégné de résine, etc. Bien entendu, selon le procédé de l'invention, toute autre matière adaptée pour former un plan récepteur, telle que marbre, granit, plaque de matériau synthétique... peut être employée.

Avant d'opérer la découpe de l'ouverture 3, par exemple sur une machine de défonçage / détourage à commande numérique, on réalise sur la face inférieure 2b du plan récepteur des logements d'indexation 4 permettant ultérieurement de positionner avec exactitude le plan récepteur.

Comme on le verra dans la suite, le chant 3a de l'ouverture 3 peut présenter essentiellement deux formes : dans un premier mode d'exécution de l'ouverture, illustré aux figures 1, 2 et 4b, le chant 3a est réalisé par une découpe sensiblement orthogonale aux plans des faces principales du plan récepteur. Avantageusement, lorsque le plan récepteur 2 est formé d'un panneau support 8 et d'une plaque de décor 9, la découpe de l'ouverture 3 s'effectue dans toute l'épaisseur du panneau support 8, laissant subsister au moins une partie de la plaque décor 9 pour former un surplomb 9a au dessus de l'ouverture.

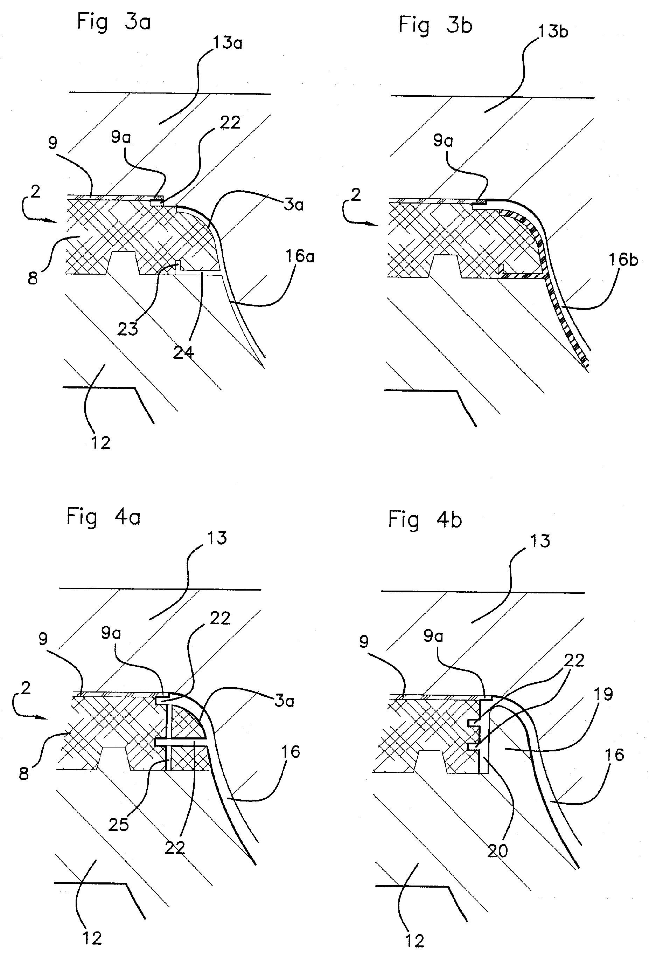

Dans un second mode d'exécution de l'ouverture, illustré aux figures 3a, 3b et 4a, le chant 3a de l'ouverture présente un profil curviligne, sensiblement parallèle à la forme de la paroi de la vasque.

Quelle que soit la forme du chant de l'ouverture, on place ensuite le plan récepteur 2 dans un moule 10 d'injection pour matière synthétique thermoplastique afin de mouler directement la vasque 1 sur le plan récepteur 2.

Le moule 10 comporte une première coquille qui est appelée coquille inférieure 12 par référence à un sens haut / bas tel que défini précédemment par rapport au sens de la vasque en position de service. La coquille inférieure 12 présente une zone centrale de forme générale concave adaptée pour former la surface du dessous de la vasque. A la périphérie de la zone concave de la coquille inférieure, celle-ci est adaptée pour venir en appui plan sur la face inférieure 2b du plan récepteur et comporte des saillies 5 adaptées pour s'engager dans les logements d'indexation 4 ménagés dans la face inférieure 2b du plan récepteur 2.

Le moule 10 comporte également une deuxième coquille dite coquille supérieure 13, présentant une zone centrale de forme générale convexe adaptée pour former la surface du dessus de la vasque. A noter que la surface de la coquille supérieure 13 est en général polie miroir afin de donner un état de surface et un aspect lisse et brillant à la vasque moulée.

A la périphérie de la zone convexe de la coquille supérieure, celle-ci est adaptée pour venir en appui plan sur la face supérieure 2a du plan récepteur 2. La coquille supérieure 13 est mobile par coulissement le long de colonnes 11 par rapport à la coquille inférieure 12 au moyen de vérins (non représentés) permettant de fermer le moule 10.

Lorsque le moule 10 est ouvert, le plan récepteur 2 est installé sur la coquille inférieure 12, les saillies 5 de la coquille inférieure venant en correspondance avec les logements d'indexation 4 de la face inférieure 2b du plan récepteur. Le moule est alors refermé en rapprochant la coquille supérieure 13 de la coquille inférieure 12 au moyen des vérins, jusqu'à ce que le plan récepteur 2 soit pincé entre les deux coquilles.

Dans cette position, les zones convexe de la coquille supérieure 13 et concave de la coquille inférieure 12 viennent en regard l'une de l'autre au travers de l'ouverture 3 et forment une cavité de moulage ou empreinte 16 de la forme de la vasque 1. Le moule 10 est fermé, en périphérie de ces deux zones, par au moins une partie du chant 3a de l'ouverture du plan récepteur 2 qui forme, entre les deux coquilles, une paroi périphérique du moule reliant la coquille inférieure à la coquille supérieure.

Avantageusement, le moule 10 peut comporter des bossages 18, portés par l'une ou l'autre des coquilles (ou les deux), traversant l'empreinte 16 et interrompant sa continuité en certains points pour former des orifices tels que le trou de trop plein ou encore le trou de bonde de la vasque. Par exemple, sur la figure 1, on a représenté un bossage 18 simple porté par la coquille inférieure 12 pour former le trou de trop plein et un bossage 18', porté en partie par chacune des coquilles et ménageant une pluralité de canaux d'injection radiaux adaptés pour distribuer dans l'empreinte 16 la matière synthétique thermoplastique en provenance d'un canal d'injection principal 17.

On injecte alors, au moyen d'une presse d'injection 14, une matière synthétique thermoplastique 15, portée à sa température de fusion, dans l'empreinte 16 ainsi formée. Sous l'effet de la pression d'injection, cette matière synthétique thermoplastique se répand dans l'empreinte 16 et rejoint les bords de celle-ci formés par le plan récepteur 2. La matière synthétique, à l'état liquide ou faiblement visqueux, adhère au chant 3a de l'ouverture 3 aux endroits où elle entre en contact avec lui et réalise ainsi un « surmoulage » d'au moins une partie de ce chant. Après refroidissement et solidification de la matière synthétique et démoulage, on obtient un ensemble monobloc 30 (figure 5) comprenant une vasque 1 solidaire du plan récepteur 2.

Avantageusement, la coquille supérieure 13 présente une partie périphérique en appui plan sur le plan récepteur 2 en continuité avec la zone centrale convexe pour former une paroi supérieure de l'empreinte 16 qui s'étend exclusivement au niveau de la face supérieure 2a du plan récepteur 2 ou au dessous. Ainsi, l'empreinte 16 ne s'étend pas au dessus du plan récepteur et la vasque ainsi surmoulée affleure la face supérieure du plan récepteur. En outre, comme la matière synthétique thermoplastique 15 est injectée sous forme liquide ou légèrement pâteuse sous forte pression, elle comble selon une direction radiale tout l'espace formé le long de la découpe de l'ouverture et assure une continuité parfaite entre le plan récepteur et la vasque.

Dès lors, grâce au procédé selon l'invention, il n'est plus nécessaire de procéder à de longs et minutieux ajustements tant en hauteur qu'en diamètre d'une vasque préformée séparément du plan pour obtenir un parfait affleurement de celle-ci dans le plan récepteur.

Dans un premier mode d'exécution de l'ouverture 3, dans lequel le chant 3a est droit et sensiblement orthogonal aux faces supérieure 2a et inférieure 2b du plan récepteur, la coquille inférieure 12 comporte, autour de sa zone centrale concave et à l'intérieur de sa zone d'appui plan sur la face inférieure 2b du plan récepteur, un rebord 19 convexe, qui s'étend le long du chant 3a de l'ouverture, à l'intérieur et à distance de celui-ci. Ce rebord 19 forme une saillie par rapport au niveau d'appui de la face inférieure du plan récepteur, en direction de la coquille supérieure. Le sommet du rebord 19 reste au dessous du plan de la face d'appui de la coquille supérieure 13 sur la face supérieure 2a du plan récepteur. La face interne du rebord 19 s'étendant de son sommet vers la zone concave présente un profil adapté pour former, en continuité avec celle-ci, la surface du dessous de la vasque.

La face externe du rebord 19, en regard du chant 3a, ménage par rapport à celui-ci un retrait sensiblement égal à l'épaisseur de la paroi de la vasque, adapté pour former une jupe 20 périphérique venant se mouler en appui sur le chant 3a. Avantageusement, la jupe 20 rejoint le chant 3a au dessous du surplomb 9a de la plaque de décor 9 et est en contact avec celui-ci sur sa face inférieure et sur son bord intérieur. Cette disposition permet à la matière synthétique en fusion de circuler au dessous du surplomb 9a pour former la jupe 20 et d'adhérer à la face inférieure et au bord de celui-ci, formant ainsi une liaison étanche entre le plan récepteur 2 et la vasque 1.

La jupe 20 peut s'étendre sur tout ou partie de la hauteur du chant 3a. Préférentiellement, la coquille inférieure 12 comporte à la base extérieure du rebord 19 un épaulement 21 venant en contact avec le chant 3a et formant une paroi de base de la jupe 20, limitant ainsi sa hauteur. L'épaulement 21 sert ainsi de moyen de centrage de l'ouverture du plan récepteur sur la coquille inférieure et limite la quantité de matière utilisée dans la jupe 20.

L'épaulement 21 présente également, à intervalles réguliers le long du chant 3a, une hauteur accrue en direction de la face supérieure du plan récepteur, permettant ainsi de diviser la jupe 20 en secteurs indépendants. De cette manière, la jupe 20 est au moins partiellement discontinue ce qui permet d'absorber les contraintes de dilatation le long de la jupe.

En variante ou en combinaison, lorsque le plan récepteur est formé d'un panneau support 8 en particules de bois agglomérées, l'épaulement 21 peut être également placé au moins partiellement en retrait à une faible distance du chant 3a, par exemple de l'ordre de 0,5 mm pour permettre de recouvrir tout le chant 3a par un film de matière synthétique injectée permettant ainsi d'améliorer l'étanchéité et d'empêcher la pénétration d'humidité dans l'épaisseur du panneau. Bien entendu, quelques points de contact ne présentant pas ce retrait permettent de conserver la fonction de centrage du plan récepteur sur le moule.

Ce premier mode d'exécution, présentant une ouverture 3 à chant 3a droit et orthogonal au plan récepteur 2, et un rebord 19 convexe, permet de maitriser l'épaisseur de la paroi de la vasque 1 entre le sommet du rebord 19 où elle se raccorde au plan récepteur et le fond de la vasque. La paroi de la vasque 1 présente ainsi une épaisseur variant d'environ 2 mm au voisinage du sommet du rebord 19 à environ 4 mm au fond de la vasque. Celle-ci est alors en quelque sorte « suspendue » par la jupe 20 au chant 3a, ce qui introduit une certaine souplesse améliorant la tenue de la vasque aux variations thermiques.

Dans un deuxième mode d'exécution non-revendiqué, l'ouverture dans le plan récepteur 2, le chant 3a de l'ouverture présente un profil curviligne, sensiblement parallèle à la forme de la paroi de la vasque 1. Dans ce cas, la coquille inférieure 12 ne présente pas de rebord 19 et la zone centrale concave est directement reliée à la partie de la coquille 12 adaptée pour venir en appui plan sur la face inférieure 2b du plan récepteur. Dans le cas où le plan récepteur 2 comporte une plaque de décor 9 par exemple en stratifié collée sur un panneau support 8, on réalise lors de la découpe de l'ouverture 2 une ou plusieurs saignées radiales parallèles au plan des faces supérieure et inférieure du plan récepteur. En particulier, on réalise une saignée 22 radiale juste au dessous de la plaque de décor 9, cette saignée 22 étant délimitée en partie supérieure par la plaque de décor. De cette manière, comme vu précédemment en relation avec le premier mode d'exécution, la matière synthétique injectée dans le moule 10 dispose d'un volume de compensation permettant à la matière de combler les éventuelles variations de la découpe de l'ouverture 2 et d'adhérer au surplomb 9a pour renforcer l'étanchéité périphérique de la vasque. On note en outre qu'une telle saignée radiale forme un moyen d'ancrage de la vasque 1 dans le plan récepteur 2. D'autres moyens d'ancrage de la vasque 1 sur le plan récepteur 2 peuvent comprendre d'autres saignées 22 radiales placées par exemples à des hauteurs intermédiaires sur le chant 3a de l'ouverture 2 comme représenté en figure 4a, des trous 25 percés orthogonalement à la face inférieure 2b, répartis régulièrement autour de l'ouverture 2 et traversant lesdites saignées 22, permettant ici encore de fournir un volume de compensation à la matière synthétique injectée et un ancrage s'opposant à un éventuel retrait radial des bords de la vasque 1.

Bien entendu, ces moyens d'ancrage, en particulier les saignées 22 radiales, peuvent être également utilisées dans le premier mode d'exécution du chant 3a de l'ouverture, comme représenté en figure 4b, permettant ainsi à la jupe 20 de s'ancrer dans le chant 3a et de résister à d'éventuelles contraintes s'exerçant sur la vasque orthogonalement au plan récepteur (pose de l'ensemble plan / vasque terminé en appui sur la vasque par exemple).

D'autres moyens d'ancrage peuvent être réalisés en fonction des besoins, tels qu'une rainure 23 orthogonale à la face inférieure 2b, formée dans la face inférieure du plan récepteur, sensiblement parallèlement à l'ouverture, et reliée à celle-ci par un évidement radial 24 de ladite face inférieure. Une telle rainure 23 et l'évidement radial 24 associés coopèrent ainsi avec le bord de la vasque 1 en appui sur le chant 3a pour prendre le plan récepteur 2 en feuillure, immobilisant ainsi la vasque sur le plan.

Quelle que soit la forme du chant 3a et de la coquille inférieure 12, le procédé de réalisation d'une vasque intégrée à un plan récepteur selon l'invention peut présenter deux variantes principales.

Dans une première variante, le moulage de la vasque 1 s'effectue en une seule passe, en utilisant une matière synthétique thermoplastique unique. Par exemple, l'utilisation de polyméthacrylate de méthyle (PMMA) est particulièrement appréciable au vu de l'état de surface obtenu pour la vasque. En particulier, un PMMA du type commercialisé par la société EVONIK Industries sous la référence PLEXIGLAS® zk5HF, de grade modifié pour une meilleure résistance aux chocs et coloré avec un colorant blanc permet d'obtenir une vasque comparable dans son aspect aux vasques thermoformées de la technique antérieure. Bien entendu, d'autres matières peuvent être utilisées, comme les polycarbonates (PC), en particulier le polycarbonate commercialisé par la société UNIGEL PLASTIQUES sous la référence DUROLON® IR2200 ou les polyamides (PA12 par exemple, tel que le RILSAN® PA12 AMNO de la société ARKEMA).

Cependant, dans certains cas où le cahier des charges de la vasque exige une tenue améliorée aux chocs par exemple, il peut être nécessaire de renforcer la vasque par l'insertion, avant moulage, d'un insert de renfort 26, par exemple sous la forme d'un « panier » ou d'une calotte moulée préalablement dans une matière apportant une résistance accrue. Par exemple un « panier » réalisé sous la forme d'une grille radiale ajourée en ABS peut être disposé au fond de la coquille inférieure 12, avant fermeture du moule 10. Lors de l'injection de la matière 15, celle-ci enrobe et englobe le « panier » qui est noyé dans la matière ainsi injectée et contribue à renforcer la tenue mécanique du fond de la vasque 1.

Dans une deuxième variante du procédé de l'invention, le moulage de la vasque 1 s'effectue en deux étapes, en utilisant deux matières synthétiques thermoplastiques de propriétés distinctes.

Dans une première passe, représentée en figure 3a, on utilise une coquille supérieure 13a qui définit avec la coquille inférieure 12 une première empreinte 16a. Cette première empreinte est adaptée pour former, après injection, une première couche de la vasque 1, d'épaisseur inférieure à l'épaisseur de la vasque finie, s'étendant sur le dessous de la vasque. On note que la coquille supérieure 13a est adaptée lorsque le moule 10 est fermé, pour obturer la saignée 22 de manière à éviter l'injection de matière dans celle-ci lors de cette première passe. On injecte alors une première matière synthétique thermoplastique dans l'empreinte 16a. Cette première matière synthétique est choisie en fonction des qualités de résistance mécanique qu'elle est susceptible de conférer à la vasque finale. Par exemple, on choisit cette première matière parmi des matières synthétiques thermoplastiques telles que les ABS, les polyamides (présentant ou non une charge de fibres de verre) ou les polycarbonates.

Une fois cette première passe réalisée, on ouvre le moule 10 et on remplace la coquille supérieure 13a par une coquille supérieure 13b adaptée pour définir, au dessus de la couche moulée lors de la première passe, une seconde empreinte 16b formant la couche intérieure visible de la vasque. On injecte alors dans l'empreinte 16b une deuxième matière synthétique thermoplastique choisie pour conférer l'état de surface et les qualités d'aspect de la vasque.

Pour cette deuxième matière, on choisit de préférence une matière du type de celles précédemment citées en relation avec la première variante du procédé utilisant une matière synthétique unique (PMMA, polycarbonates...).

Comme on l'a vu plus haut, la découpe de l'ouverture du plan récepteur diffère des découpes réalisées pour les plans récepteurs de la technique antérieure en ce qu'on ménage des moyens d'ancrage, par exemple sous la forme d'une ou plusieurs saignées 22 radiales dans le chant 3a de l'ouverture. Ces saignées 22 peuvent être continues ou interrompues le long du contour de l'ouverture. Elles forment des évidements parallèles aux faces du plan récepteur adaptés pour recevoir la matière synthétique injectée. En particulier, les plans récepteurs selon l'invention, lorsqu'ils sont formés par un panneau support 8 sur lequel est collée une plaque de décor 9, comportent une saignée 22 radiale, contiguë à la plaque de décor de manière à ce que celle-ci forme un surplomb 9a au dessus de la saignée.

Comme on l'a vu précédemment, les logements d'indexation 4 réalisés sur la face inférieure 2b du plan récepteur 2 ont pour fonction primaire de coopérer avec des saillies 5 ménagées sur la coquille inférieure 12 afin de positionner le plan récepteur par rapport au moule. De manière avantageuse, au moins certains de ces logements 4 et des saillies 5 sont dimensionnés de façon à remplir une fonction secondaire de maintien du plan récepteur 2 afin de résister à la pression radiale exercée par la matière synthétique thermoplastique lors de l'injection de la vasque 1.

Cependant, en fonction des tailles respectives de l'ouverture 3 percée dans le plan récepteur 2 et du plan récepteur lui-même, il est possible que le chant 3a de l'ouverture se situe à proximité d'un bord externe du plan récepteur de sorte que la paroi radiale restante du plan récepteur soit d'épaisseur insuffisante pour prévoir les logements 4 et saillies 5 appropriées pour éviter l'éclatement du plan récepteur sous l'effet de la pression d'injection.

Dans ce cas, pour un plan récepteur 2 réalisé en une matière déformable telle qu'un panneau de particules de bois agglomérées, la fonction d'immobilisation du plan récepteur pour résister à la pression radiale peut être réalisée par des reliefs 27 (fig.2) ménagés sur la surface de la coquille inférieure 12 recevant le plan récepteur. Par exemple, ces reliefs 27 sont en forme de pointes de diamant ou de chevrons, le cas échéant arrondis, présentant une section de forme générale triangulaire dans un plan orthogonal à la face inférieure 2b. Ces reliefs sont adaptés pour déformer plastiquement la face inférieure du plan récepteur sous l'effort de fermeture du moule et ancrer le plan dans sa position à la fermeture du moule. Bien entendu, le profil de ces reliefs est adapté pour ne pas affecter l'appui plan du plan récepteur 2 sur la coquille inférieure 12 une fois le moule fermé ni arracher de matière au plan récepteur 2 lors de l'ouverture du moule en fin de cycle.

Dans le cas où la matière du plan récepteur est indéformable (par exemple marbre ou granit) l'emploi de reliefs n'est pas souhaitable. Il est alors possible de prévoir une butée d'immobilisation, par exemple sous la forme d'un muret 28 mobile de hauteur inférieure à l'épaisseur du plan récepteur 2, venant en appui latéral contre un bord externe de celui-ci aux points jugés les plus fragiles.

L'invention s'étend encore à un ensemble monobloc 30 tel qu'illustré à la figure 5, comprenant un plan récepteur 2, par exemple formé d'un panneau support 8 recouvert d'une plaque de décor 9 en stratifié. Ce plan récepteur peut présenter des formes comportant un retour sur l'avant du plan et un dosseret à l'arrière. Dans ce cas, le moule 10 est adapté pour permettre le passage de ces parties en saillie.

L'ensemble monobloc 30 comporte au moins une vasque 1 surmoulée sur le chant de l'ouverture pratiquée dans le plan récepteur. Il peut également comprendre deux ou plusieurs vasques, obtenues par des opérations de moulage successives, après un déplacement longitudinal du plan récepteur dans le moule, pour autant que les ouvertures correspondantes aient été préparées.

## Revendications

1. Procédé de réalisation d'une vasque (1) intégrée à un plan de travail, dit plan récepteur (2), comportant une face supérieure (2a) et une face inférieure (2b), procédé selon lequel :
- on perce de part en part le plan récepteur et on forme une ouverture (3) adaptée pour recevoir la vasque,
- on utilise un moule (10) comprenant :
• une première coquille de forme générale concave, dite coquille inférieure (12), adaptée pour venir en appui sur la face inférieure (2b) du plan récepteur et
• au moins une coquille de forme générale convexe, dite coquille(s) supérieure(s) (13, 13a, 13b), adaptée(s) pour venir en appui sur la face supérieure (2a) du plan récepteur et former avec la coquille inférieure une cavité de moulage, dite empreinte (16), de la forme de la vasque à obtenir,
- on installe le plan récepteur (2) dans le moule de manière à pincer la périphérie de l'ouverture (3) du plan récepteur entre la coquille inférieure et une coquille supérieure de telle sorte qu'au moins une partie du chant (3a) de l'ouverture constitue une paroi périphérique continue du moule reliant la coquille inférieure à la coquille supérieure,
**caractérisé en ce que**
- le moule est adapté pour permettre l'injection de matière synthétique thermoplastique,
- la coquille inférieure (12) comporte une zone concave entourée d'un rebord (19) convexe s'étendant le long du chant (3a) de l'ouverture, à l'intérieur et à distance de celui-ci, en saillie par rapport au niveau de la face inférieure (2b) du plan récepteur en direction de sa face supérieure (2a), ledit rebord étant adapté pour permettre la formation d'une jupe (20) périphérique de la vasque entre le chant (3a) de l'ouverture et ledit rebord (19) lors du surmoulage de la vasque
- et **en ce qu'**on injecte une matière synthétique thermoplastique dans l'empreinte (16) de manière à former une vasque (1) surmoulée sur le plan récepteur (2).

2. Procédé selon la revendication 1, **caractérisé en ce que** chaque coquille supérieure (13, 13a, 13b) du moule (10) est adaptée pour venir en appui plan sur le plan récepteur (2) et former une paroi supérieure de l'empreinte (16) s'étendant exclusivement au niveau et sous le niveau de la face supérieure (2a) du plan récepteur afin d'obtenir une vasque (1) surmoulée affleurant la face supérieure du plan récepteur.

3. Procédé selon l'une des revendications 1 ou 2, **caractérisé en ce que** la coquille inférieure comporte un épaulement (21) à la base du rebord (19), en regard du chant (3a) de l'ouverture, adapté pour permettre le centrage de l'ouverture (3) du plan récepteur (2) par rapport au moule (10) d'injection.

4. Procédé selon la revendication 3, **caractérisé en ce que** l'épaulement (21) présente à intervalles réguliers une hauteur accrue en direction de la face supérieure (2a) du plan récepteur afin de diviser la jupe (20) de la vasque en secteurs indépendants.

5. Procédé selon l'une des revendications 1 à 4, **caractérisé en ce que** lors de l'étape d'injection, on utilise une matière synthétique (15) thermoplastique unique pour former la vasque (1).

6. Procédé selon la revendication 5, **caractérisé en ce qu'**on utilise une matière synthétique (15) thermoplastique choisie parmi le polyméthacrylate de méthyle et les polycarbonates.

7. Procédé selon l'une des revendications 1 à 6, **caractérisé en ce que** lors de l'installation du plan récepteur (2) dans le moule (10), on fixe au plan récepteur et/ou à la coquille inférieure (12) un insert de renfort (26) adapté pour être noyé dans la matière synthétique injectée à l'étape d'injection.

8. Procédé selon l'une des revendications 1 à 4, **caractérisé en ce que** l'étape d'injection est décomposée en deux passes, une première passe utilisant une première coquille supérieure (13a) définissant une première empreinte (16a) en retrait par rapport à la face supérieure (2a) du plan récepteur et une première matière synthétique choisie pour conférer une résistance mécanique recherchée à la vasque et une deuxième passe utilisant une deuxième coquille supérieure (13b) définissant une empreinte (16b) complémentaire au dessus de la première empreinte et une deuxième matière synthétique choisie pour apporter un état de surface recherché à la vasque.

9. Procédé selon la revendication 8, **caractérisé en ce qu'**on utilise une première matière synthétique choisie parmi l'ABS, les polycarbonates et les polyamides, et une deuxième matière synthétique choisie parmi le polyméthacrylate de méthyle et les polycarbonates.

10. Procédé selon l'une des revendications 1 à 9, **caractérisé en ce que** lors de la formation de l'ouverture (3) dans le plan récepteur (2), on réalise sur et/ou au voisinage du chant (3a) de ladite ouverture des moyens d'ancrage (22, 23, 24, 25) adaptés pour permettre l'ancrage de la vasque surmoulée au plan récepteur.

11. Procédé selon la revendication 10, **caractérisé en ce que** lesdits moyens d'ancrage comportent au moins une saignée (22) radiale formée dans le chant (3a) de l'ouverture, parallèlement aux faces (2a, 2b) du plan récepteur.

12. Procédé selon la revendication 10 ou 11, **caractérisé en ce qu'**on utilise un plan récepteur (2) comprenant un panneau support (8) recouvert par une plaque de décor (9) sur la face supérieure du plan récepteur, et **en ce qu'**au moins une saignée (22) radiale est formée dans le panneau support (8), sa largeur étant limitée en direction de la face supérieure (2a) du plan récepteur par la plaque de décor (9).

13. Procédé selon l'une des revendications 1 à 12, **caractérisé en ce que** lors de la formation de l'ouverture (3) dans le plan récepteur, on réalise dans la face inférieure (2b) du plan récepteur des logements d'indexation (4) adaptés pour coopérer avec des saillies (5) ménagées sur la coquille inférieure (12) afin de positionner et maintenir le plan récepteur (2) dans le moule (10) d'injection.

14. Procédé selon l'une des revendications 1 à 13, **caractérisé en ce que** la coquille inférieure (12) comporte des moyens (27, 28) d'immobilisation du plan récepteur (2) adaptés pour résister à une pression radiale d'injection s'exerçant sur le chant (3 a) de l'ouverture (3).

15. Procédé selon l'une des revendications 1 à 14, **caractérisé en ce qu'**au moins une des coquilles (12, 13) du moule présente des bossages (18) interrompant la continuité de l'empreinte (16) et adaptés pour former des orifices dans la vasque (1) lors du surmoulage.

16. Ensemble monobloc (30) comprenant un plan récepteur (2) et au moins une vasque (1), solidaires l'un de l'autre, **caractérisé en ce que** chaque vasque (1) comporte une jupe (20) périphérique surmoulée sur le chant (3a) d'une ouverture (3) formée dans le plan récepteur (2) et s'étendant au moins sur une partie de la hauteur du chant (3a) de manière à permettre que la vasque soit suspendue au chant de l'ouverture par sa jupe (20) périphérique.

## Patentansprüche

1. Verfahren zur Herstellung eines Waschbeckens (1), das in eine Arbeitsplatte, eine so genannte Aufnahmeplatte (2) integriert ist, umfassend eine Oberseite (2a) und eine Unterseite (2b), wobei das Verfahren Folgendes umfasst:
- Durchbohren der Aufnahmeplatte und Bilden einer Öffnung (3), die zum Aufnehmen des Waschbeckens angepasst ist,
- Verwenden einer Form (10), umfassend:
-- eine erste Schale mit einer im Allgemeinen konkaven Form, so genannte untere Schale (12), die angepasst ist, um auf die Unterseite (2b) der Aufnahmeplatte zu drücken, und
-- mindestens eine Schale mit einer im Allgemeinen konvexen Form, so genannte obere Schale(n) (13, 13a, 13b), die angepasst ist (sind), um auf die Oberseite (2a) der Aufnahmeplatte zu drücken und mit der unteren Schale eine Formkavität, einen so genannten Abdruck (16), der zu erhaltenden Waschbeckenform zu bilden,
- Anbringen der Aufnahmeplatte (2) in der Form, so dass der Rand der Öffnung (3) der Aufnahmeplatte zwischen der unteren Schale und einer oberen Schale so eingeklemmt wird, dass mindestens ein Teil der Kante (3a) der Öffnung eine durchgängige umlaufende Wand der Form bildet, welche die untere Schale mit der oberen Schale verbindet,
**dadurch gekennzeichnet, dass**
- die Form angepasst ist, um das Einspritzen von thermoplastischem Kunststoff zu ermöglichen,
- die untere Schale (12) einen konkaven Bereich umfasst, der von einem konvexen Rand (19) umgeben ist, der sich entlang der Kante (3a) der Öffnung erstreckt, innerhalb und beabstandet von dieser, vorspringend in Bezug auf die Höhe der Unterseite (2b) der Aufnahmeplatte in Richtung ihrer Oberseite (2a), wobei der Rand angepasst ist, um die Bildung einer umlaufenden Schürze (20) des Waschbeckens zwischen der Kante (3a) der Öffnung und dem Rand (19) beim Umspritzen des Waschbeckens zu ermöglichen,
- und dadurch, dass ein thermoplastischer Kunststoff in den Abdruck (16) eingespritzt wird, um ein umspritztes Waschbecken (1) auf der Aufnahmeplatte (2) zu bilden.

2. Verfahren nach Anspruch 1, **dadurch gekennzeichnet, dass** jede untere Schale (13, 13a, 13b) der Form (10) angepasst ist, um auf die Aufnahmeplatte (2) zu drücken und eine obere Wand des Abdrucks (16) zu bilden, die sich ausschließlich auf Höhe und unter der Höhe der Oberseite (2a) der Aufnahmeplatte erstreckt, um ein umspritztes Waschbecken (1) zu erhalten, das mit der Oberseite der Aufnahmeplatte bündig ist.

3. Verfahren nach einem der Ansprüche 1 oder 2, **dadurch gekennzeichnet, dass** die untere Schale einen Absatz (21) an der Basis des Rands (19) umfasst, gegenüber der Kante (3a) der Öffnung, der angepasst ist, um die Zentrierung der Öffnung (3) der Aufnahmeplatte (2) in Bezug auf die Form (10) für den Spritzguss zu ermöglichen.

4. Verfahren nach Anspruch 3, **dadurch gekennzeichnet, dass** der Absatz (21) in regelmäßigen Abständen eine Erhöhung in Richtung Oberseite (2a) der Aufnahmeplatte aufweist, um die Schürze (20) des Waschbeckens in unabhängige Sektoren zu teilen.

5. Verfahren nach einem der Ansprüche 1 bis 4, **dadurch gekennzeichnet, dass** beim Schritt des Einspritzens ein einheitlicher thermoplastischer Kunststoff (15) verwendet wird, um das Waschbecken (1) zu bilden.

6. Verfahren nach Anspruch 5, **dadurch gekennzeichnet, dass** ein thermoplastischer Kunststoff (15) verwendet wird, der ausgewählt wird aus Polymethylmethacrylat und Polycarbonaten.

7. Verfahren nach einem der Ansprüche 1 bis 6, **dadurch gekennzeichnet, dass** beim Anbringen der Aufnahmeplatte (2) in der Form (10) an der Aufnahmeplatte und/oder an der unteren Schale (12) eine Verstärkungseinlage (26) befestigt wird, die angepasst ist, um im Kunststoff, der beim Schritt des Einspritzens eingespritzt wird, versenkt zu werden.

8. Verfahren nach einem der Ansprüche 1 bis 4, **dadurch gekennzeichnet, dass** der Schritt des Einspritzens aus zwei Schüssen besteht, einem ersten Schuss, der eine erste obere Schale (13a) verwendet, die einen ersten Abdruck (16a) definiert, der in Bezug auf die Oberseite (2a) der Aufnahmeplatte zurückversetzt ist, und einen ersten Kunststoff, der ausgewählt wird, um dem Waschbecken eine gesuchte mechanische Festigkeit zu verleihen, und einem zweiten Schuss, der eine zweite obere Schale (13b) verwendet, die einen komplementären Abdruck (16b) über dem ersten Abdruck definiert, und einen zweiten Kunststoff, der ausgewählt wird, um dem Waschbecken einen gesuchten Oberflächenzustand zu verleihen.

9. Verfahren nach Anspruch 8, **dadurch gekennzeichnet, dass** ein erster Kunststoff verwendet wird, der ausgewählt wird aus ABS, Polycarbonaten und Polamiden, und ein zweiter Kunststoff, der ausgewählt wird aus Polymethylmethacrylat und Polycarbonaten.

10. Verfahren nach einem der Ansprüche 1 bis 9, **dadurch gekennzeichnet, dass** bei der Bildung der Öffnung (3) in der Aufnahmeplatte (2) auf und/oder in der Nähe der Kante (3a) der Öffnung Verankerungsmittel (22, 23, 24, 25) ausgeführt werden, die angepasst sind, um die Verankerung des umspritzten Waschbeckens in der Aufnahmeplatte zu ermöglichen.

11. Verfahren nach Anspruch 10, **dadurch gekennzeichnet, dass** die Verankerungsmittel mindestens einen radialen Schlitz (22) umfassen, der in der Kante (3a) der Öffnung gebildet ist, parallel zu den Seiten (2a, 2b) der Aufnahmeplatte.

12. Verfahren nach Anspruch 10 oder 11, **dadurch gekennzeichnet, dass** eine Aufnahmeplatte (2) verwendet wird, die ein Auflagepanel (8) umfasst, das von einer Dekorplatte (9) auf der Oberseite der Aufnahmeplatte bedeckt ist, und dadurch, dass mindestens ein radialer Schlitz (22) im Auflagepanel (8) gebildet ist, wobei seine Breite in Richtung Oberseite (2a) der Aufnahmeplatte von der Dekorplatte (9) begrenzt wird.

13. Verfahren nach einem der Ansprüche 1 bis 12, **dadurch gekennzeichnet, dass** bei der Bildung der Öffnung (3) in der Aufnahmeplatte in der Unterseite (2b) der Aufnahmeplatte Indizierungsaussparungen (4) ausgeführt werden, die angepasst sind, um mit Vorsprüngen (5) zusammenzuwirken, die auf der unteren Schale (12) ausgebildet sind, um die Aufnahmeplatte (2) in der Form (10) für den Spritzguss zu positionieren und zu halten.

14. Verfahren nach einem der Ansprüche 1 bis 13, **dadurch gekennzeichnet, dass** die untere Schale (12) Mittel (27, 28) zum Fixieren der Aufnahmeplatte (2) umfasst, die angepasst sind, um einem radialen Spritzdruck standzuhalten, der auf die Kante (3a) der Öffnung (3) ausgeübt wird.

15. Verfahren nach einem der Ansprüche 1 bis 14, **dadurch gekennzeichnet, dass** mindestens eine der Schalen (12, 13) der Form Buckel (18) aufweist, welche die Durchgängigkeit des Abdrucks (16) unterbrechen und angepasst sind, um Öffnungen im Waschbecken (1) beim Umspritzen zu bilden.

16. Einstückige Einheit (30), umfassend eine Aufnahmeplatte (2) und mindestens ein Waschbecken (1), die fest miteinander verbunden sind, **dadurch gekennzeichnet, dass** jedes Waschbecken (1) eine umlaufende Schürze (20) umfasst, die auf der Kante (3a) einer Öffnung (3) umspritzt ist, die in der Aufnahmeplatte (2) gebildet ist, und sich mindestens auf einem Teil der Höhe der Kante (3a) erstreckt, um zu ermöglichen, dass das Waschbecken an der Kante der Öffnung durch seine umlaufende Schürze (20) aufgehängt wird.

## Claims

1. A method for producing a basin (1) integrated in a work surface, named the receiving plane (2), comprising an upper surface (2a) and a lower surface (2b), according to which method
- the receiving plane is pierced right through and an opening (3) adapted to receive the basin is formed,
- a mould (10) is used, comprising:
• a first lower shell of generally concave shape, named the lower shell (12), adapted to bear on the lower surface (2b) of the receiving plane and
• at least one upper shell of generally convex shape, named the upper shell(s) (13, 13a, 13b), adapted to bear on the upper surface (2a) of the receiving plane and form with the lower shell a moulding cavity, named impression (16), with the shape of the basin to be obtained,
- the receiving plane (2) is installed in the mould so as to clamp the periphery of the opening (3) of the receiving plane between the lower shell and an upper shell in such a way that at least part of the edge (3a) of the opening constitutes a continuous peripheral wall of the mould connecting the lower shell to the upper shell, **characterised in that**
- the mould is adapted to enable a thermoplastic synthetic material to be injected,
- the lower shell (12) has a concave zone surrounded by a convex rim (19) extending along the edge (3a) of the opening, inside and at a distance from the edge, projecting relative to the level of the lower surface (2b) of the receiving plane in the direction of its upper surface (2a), said rim being adapted to enable the formation of a peripheral skirt (20) of the basin between the edge (3a) of the opening and said rim (19) during the moulding-on of the basin,
- and **in that** a thermoplastic synthetic material is injected into the impression (16) so as to form a basin (1) moulded onto the receiving plane (2).

2. A method according to claim 1, **characterised in that** each upper shell (13, 13a, 13b) of the mould (10) is adapted to bear in a planar manner on the receiving plane (2) and to form an upper wall of the impression (16) extending solely at the level of and below the level of the upper surface (2a) of the receiving plane in order to obtain a moulded-on basin (1) flush with the upper surface of the receiving plane.

3. A method according to claims 1 and 2, **characterised in that** the lower shell has a shoulder (21) at the base of the rim (19), facing the edge (3a) of the opening, adapted to enable the centring of the opening (3) of the receiving plane (2) relative to the injection mould (10).

4. A method according to claim 3, **characterised in that** the shoulder (21) has at regular intervals an increased height in the direction of the upper surface (2a) of the receiving plane in order to divide the skirt (20) of the basin into independent sectors.

5. A method according to one of claims 1 to 4, **characterised in that** during the injection stage, a single thermoplastic synthetic material (15) is used to form the basin (1).

6. A method according to claim 5, **characterised in that** a thermoplastic synthetic material (15) chosen from polymethylmethacrylate and polycarbonates is used.

7. A method according to one of claims 1 to 6, **characterised in that** during the installation of the receiving plane (2) in the mould (10), a reinforcing insert (26) adapted to be embedded in the synthetic material injected at the injection stage is fixed to the receiving plane and/or the lower shell (12).

8. A method according to one of claims 1 to 4, **characterised in that** the injection stage is divided into two passes, a first pass using a first upper shell (13a) defining a first impression (16a) set back relative to the upper surface (2a) of the receiving plane and a first synthetic material chosen to impart a desired mechanical strength to the basin and a second pass using a second upper shell (13b) defining a complementary impression (16b) above the first impression and a second synthetic material chosen to provide a desired surface finish for the basin.

9. A method according to claim 8, **characterised in that** a first synthetic material chosen from ABS, polycarbonates and polyamides is used, and a second synthetic material chosen from polymethylmethacrylate and polycarbonates is used.

10. A method according to one of claims 1 to 9, **characterised in that** during the formation of the opening (3) in the receiving plane (2), anchoring means (22, 23, 24, 25) adapted to enable the anchoring of the moulded-on basin to the receiving plane are produced on and/or in the vicinity of the edge (3a) of said opening.

11. A method according to claim 10, **characterised in that** said anchoring means have at least one radial groove (22) formed in the edge (3a) of the opening, parallel to the surfaces (2a, 2b) of the receiving plane.

12. A method according to claim 10 or 11, **characterised in that** a receiving plane (2) comprising a supporting panel (8) covered with a decorative sheet (9) on the upper surface of the receiving plane is used, and that at least one radial groove (22) is formed in the supporting panel (8), its width being limited in the direction of the upper surface (2a) of the receiving plane by the decorative sheet (9).

13. A method according to one of claims 1 to 12, **characterised in that** during the formation of the opening (3) in the receiving plane, indexing receptacles (4) are made in the lower surface (2b) of the receiving plane which are adapted to cooperate with projections (5) formed on the lower shell (12) in order to position and hold the receiving plane (2) in the injection mould (10).

14. A method according to one of claims 1 to 13, **characterised in that** the lower shell (12) has means (27, 28) for immobilising the receiving plane (2) which are adapted to withstand a radial injection pressure exerted on the edge (3a) of the opening (3).

15. A method according to one of claims 1 to 14, **characterised in that** at least one of the shells (12, 13) of the mould has bosses (18) interrupting the continuity of the impression (16) and adapted to form orifices in the basin (1) during the moulding-on.

16. A monobloc assembly (30) comprising a receiving plane (2) and at least one basin (1) which are integral with one another, **characterised in that** each basin (1) has a peripheral skirt (20) moulded onto the edge (3a) of an opening (3) formed in the receiving plane (2) and extending at least partly on the upper part of the edge (3a) so as to enable the basin to be suspended on the edge of the opening by its peripheral skirt (20).
